# EUROPEAN PATENT APPLICATION

(11) **EP 1 484 827 A1**
(43) Date of publication of application: **08.12.2004**
(21) Application number: 03714972.1
(22) Date of filing: 12.03.2003
(51) Int. Cl.: H02B 7/08, H02B 1/50

(54) **BURIED CONTAINER FOR ELECTRICAL, ELECTRONIC AND SIMILAR EQUIPMENT**

(30) Priority: 13.03.2002 ES 200200628 U
(71) Applicant: Metalurgica Casbar, S.A., 28935 Mostoles (ES)
(72) Inventor: FERNANDEZ ZABALA, José Manuel, E-28935 Mostoles (ES); JARRIN SASTRE, Manuel, E-28935 Mostoles (ES); ARRABAL GALLEGO, Mario, E-28935 Mostoles (ES)
(74) Representative: Gonzalez Vacas, Eleuterio
(86) International application number: PCT/ES2003/000109
(87) International publication number: WO 2003/077392

(57) **Abstract**

The invention has the purpose, as indicated in its heading, of a container for electrical, electronic and similar equipment, of the type wherein said equipment can emerge outside the container to be directly accessible from the ground in maintenance operations; it is formed from a fixed body with which there collaborates a cover, vertically displaceable in relation thereto, with the special characteristic that the means of displacement and guiding of said cover are housed inside the container and the supports of the electrical and/or electronic equipment are supported on a table that will move with the cover when lifted.

## Description

### OBJECT OF THE INVENTION

The present invention relates to a container, of the type that are intended to be situated immediately below ground level, i.e. buried, such as those used in underground electrical networks or installations, in telecommunications networks, etc.

The object of the investigation is to facilitate access to said equipment during maintenance work thereof, the container being completely airtight when closed.

### BACKGROUND OF THE INVENTION

For reasons of environmental aesthetics, the classic outside cabinets for equipment which is part of electric or electronic installations are currently buried so that their cover is at ground level, minimally affecting their environment.

These cabinets or containers should be oversized for the purpose of permitting an access sub-cover to be established in their cover for operators carrying out maintenance work and for the purpose that within the container there is, in turn, free space so that said operators can move during the usual maintenance operations, all of which means an appreciable cost increase, an excessive use of space and uncomfortable operative, amongst other problems of less importance.

In an attempt to prevent accessibility problems, establishing a concrete box on the ground, to contain a cabinet of any conventional type is known, a cabinet aided by means of hydraulic or pneumatic operation which permit the lifting thereof, i.e. its emergence in relation to ground level, so that the maintenance operations are performed in this position, from the street and with maximum facility.

Nevertheless this solution presents, in turn, extensive and varied problems, which basically centre on the following aspects:
- The lifting means of the cabinet are located thereunder, so that the depth of the box, and in consequence, its size, is practically double the useful height of the cabinet.
- The necessary guides for the correct vertical displacement of the cabinet, are located at the sides thereof, which, in turn, determine that the useful section of the cabinet is considerably less than the section of the box, with the consequent waste of space in this sense.
- In addition to it being necessary to have a box which is particularly oversized in volume in relation to the useful volume of the cabinet, the cost is considerably increased by the presence of two containers: the box and the cabinet.

### DESCRIPTION OF THE INVENTION

The buried container that the invention proposes resolves in a fully satisfactorily manner the aforementioned problem in the different aspects mentioned, and this is based on the use of a single cabinet or container, whose body is fixed, being duly buried in the ground with no other constraints than the inclusion therein of a concrete slab as a base, to assure proper stability, the cover being removably mounted, capable of the airtight closure of said body, operated and guided by means established inside the container, and with the special characteristic that the supports for the electric or electronic equipment are situated on a table or bracket that carries out the function of housing and supporting open standardized structures for the location of electrical equipment or those of another nature therein, fixed and positioned so that they move with the cover, i.e. when said cover is raised they are directly accessible from ground level.

In this way, an appreciable structural simplification and a better use of the available space are achieved.

To move the lid and the elements connected thereto, a hydraulic or pneumatic pump has been provided, operated through the cover, preferably with the aid of a special key, operated in turn by a battery drill of any conventional type, which should be transported by the maintenance employees, a pump that, through a distribution manifold, acts on a hydraulic or pneumatic cylinder which raises and lowers the cover, two or more telescopic guides suitably distributed between the cover and the bottom of the container collaborating with said cylinder and they can be connected or joined thereto, without them needing to touch the base or bottom of the container, the cover being supported by a guided structure.

The body of the container is structured from a robust base in the form of the aforementioned concrete slab, wherefrom a structure based on robust aluminium sections emerges which frames thick, sandwich-type panels which form the side walls of the container, with a high thermal insulation coefficient, with the additional special characteristic that the upper belt of the structure has an acutely bevelled or sloped inlet identical to the perimeter rim of the cover, to avoid dirt being deposited in said inlet which could damage the airtight closure of the cover, this special configuration of the inlet further collaborating in facilitating the self-centering of the cover. The sandwich-type panels have the aim of preventing, as far as is possible, the exchange of heat and cold, both inside and outside the container.

### DESCRIPTION OF THE DRAWINGS.

To complement the description being made and with the object of helping towards a better understanding of the characteristics of the invention, in accordance with a preferred example of practical embodiment thereof, a set of drawings is attached, being an integral part of said description, wherein the following is represented with an illustrative, non-limiting character
- Figure 1: shows a schematic, sectioned side elevational representation of a buried container for electrical, electronic or similar equipment and of other natures, embodied in accordance with the present invention,
- Figure 2: shows a plan, sectioned schematic representation of a section of the container of the previous figure.
- Figure 3: shows an enlarged, close-up section of the coupling between the container body and cover.

### PREFERRED EMBODIMENT OF THE INEVENTION

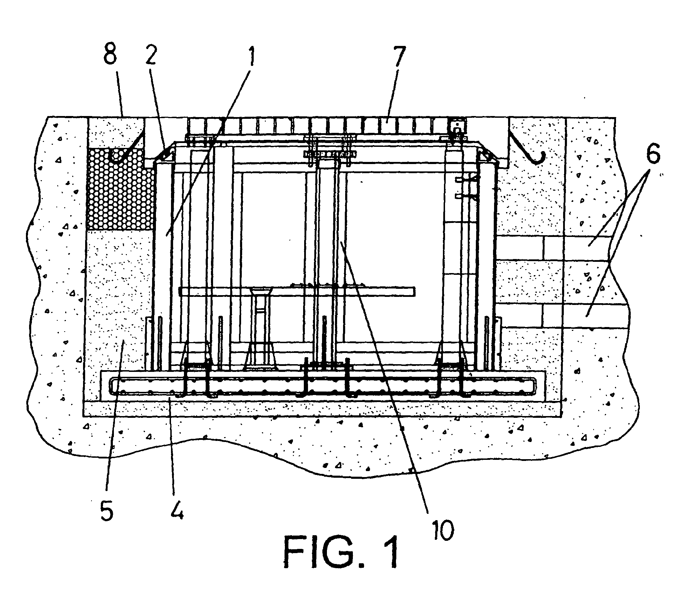

In the light of said figures it can be observed that the buried container that the invention proposes is formed from a base body (1) generally cuboid, structured from a metal framework (2), based on robust aluminium sections, which frame sandwich-type lateral enclosing panels (3) based on two side plates of any appropriate material, e.g. fibre glass (it must be a resistant material, with low thermal transmission and lightweight, which encloses therein a thick layer of expanded polymeric material, e.g. expanded polyurethane), a reinforced concrete slab (4) being integrated in said body which protrudes perimetrically and acutely in relation to the side walls of the body (1), as is clearly observed in figure 1, to appropriately stabilize the body of the container when earth (5) is compacted on the prominent slab (4) perimeter.

Obviously, when necessary, cooling pipes (6) comprised of linear pipes, normally cylindrical, which house one or two fans, which force the air inside the pipe, transmitting the heat produced by the equipment housed in the structures to ground, will have lateral access; air not being exchanged with the outside, and being capable of dissipating almost unlimited power, and obviously the pipes corresponding to that installation, there also being able to exist exhaust pipes, when generation of exhaust gases inside the container is foreseen.

The body (1) is complemented with a cover (7) that, when closed, is level with the ground or pavement (8), which is duly structured to bear the loads established by the current legislation for covers for buried containers or requirements of the customers.

The pushing cylinder (10) serves to lift the cover to the outside and suspend or hang, in certain cases, the table that will support the racks that have to protect the equipment to be protected by the container so that this equipment is vertically displaceable and lift up together with the cover (7) when it is opened.

For this, between the base (4) of the body (1) and the cover (7), preferably centrally positioned, a cylinder is established which is operated hydraulically or pneumatically, preferably with an elastic head which permits a certain tilting of the cover, a cylinder (10) operated through a distribution manifold (11) by a manual pump (12), also established in the lower or internal face of the cover and accessible from outside, specifically through a hole provided with its corresponding lock cap so that, in maintenance operations, a tool can be inserted through said hole to operate the pump, which is also special, a tool operated by an electric battery drill of those typically offered on the market.

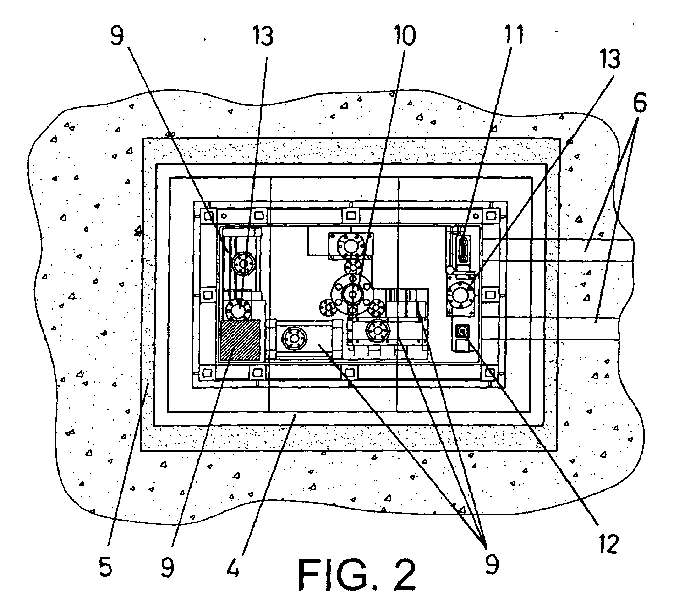

At least one pair of telescopic guides (13) collaborate with the cylinder (10), in the example of practical embodiment three are chosen as shown in figure 2, which also extends between the bottom (4) of the container and the cover (7), which are also inside thereof, said guides can be attached to the container structure without reaching the bottom (4).

In accordance with this structure when, with the collaboration of said battery drill, the pump rotates (12) in a certain way, the cover (7) will lift up pulling the equipment with it, to an upper limit where they are directly accessible from the ground (8), whilst the electric drill moving in the opposite direction also causes the cover (7) to move in the opposite direction until it recovers its initial closure position, provided that the distribution manifold is suitably positioned for each movement.

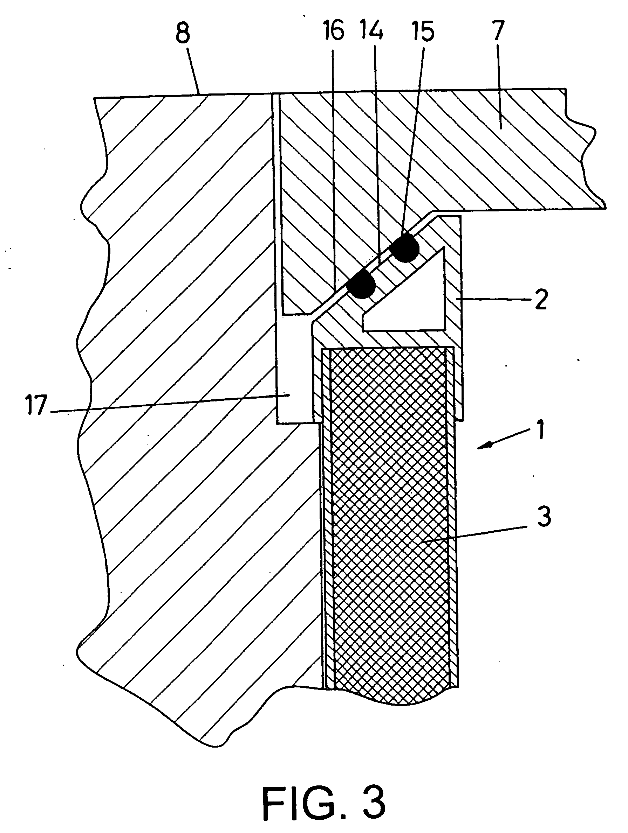

To avoid dirt from being deposited in the body (1) inlet during maintenance operations, which could cause loss of airtightness in the closure, it has been designed that the sections (2) corresponding to said inlet, as is observed in figure 3, offer a support plane (14) for the cover (7), acutely sloping outwards and downwards, wherein the gaskets are located, always located in the inclined plane of the cover (7), the cover, in turn, having a perimeter rim determining a complementary inclined plane (16), so that in the case of possible displacement of dirt that may be found on the ground (8) to the container when the cover (7) is open, said dirt when it hits the plane (14) falls by gravity into the small perimeter container (17) determined by the oversize of the cover (7) in relation to the body (1) inlet, maintaining said inclined plane (14) perfectly clean to assure optimal closure conditions.

## Claims

1. Buried container for electrical, electronic and similar equipment, of the type wherein said equipment can emerge outside the container so they are directly accessible from the ground in maintenance operations, **characterized in that** there participates a fixed body therein, fixed in the ground, with which there collaborates a cover, vertically displaceable in relation thereto, with the special characteristic that the means of displacement and guiding of said cover are housed inside the container, and that the supports or racks for the electric or electronic equipment are supported on a table that will lift up with the cover when it moves.

2. Buried container for electrical, electronic and similar equipment, according to claim 1, **characterized in that** the bottom thereof is in the form of a robust concrete slab, which protrudes perimetrically in relation to the side walls thereof, for perfect stabilization when buried, whilst said side walls are structured by a metal framework, based on robust aluminium sections, which frames sandwich-type panels, with a high thermal insulation coefficient.

3. Buried container for electrical, electronic and similar equipment, according to preceding claims, **characterized in that** the pipes that carry the cables for the electric or electronic equipment, through exhaust pipes and by cooling pipes, airtightly pass through the side walls of the body.

4. Buried container for electrical, electronic and similar equipment, according to preceding claims, **characterized in that** the side walls of the body have a bevelled upper edge, with an acute slope downwards and outwards, whilst the cover has a lower, perimeter rim determining a complementary inclined plane, to avoid the accumulation of dirt between both elements and to achieve the effect of self-centering the cover in the closing manoeuvre.

5. Buried container for electrical, electronic and similar equipment, according to preceding claims, **characterized in that**, between the bottom of the body and the cover, there is established, preferably in central position, a hydraulic or pneumatic cylinder, with which at least one pair of lateral telescopic guides collaborate, said cylinder being operated, through a distribution manifold by a manually operated pump, also fixed to the internal face of the cover and can be operated from outside, through a hole with its cap provided with a lock, with the collaboration of a special tool which can be operated by a manual battery drill of any conventional type.
